# EUROPEAN PATENT SPECIFICATION

(11) **EP 4 193 089 B1**
(45) Date of publication and mention of the grant of the patent: **05.03.2025**
(21) Application number: 20757799.0
(22) Date of filing: 05.08.2020
(51) Int. Cl.: F16L 37/098

(54) **FLUID CONNECTION ASSEMBLY**
FLUIDVERBINDUNGSANORDNUNG
ENSEMBLE RACCORDEMENT DE FLUIDE

(43) Date of publication of application: 14.06.2023
(73) Proprietor: Oetiker NY, Inc., Lancaster NY 14086 (US)
(72) Inventor: VANMARTER, Jeff R., Amherst, New York 14051 (US); ROMUS, Kimberly, Lancaster, New York 14086 (US)
(74) Representative: Strehl Schübel-Hopf & Partner
(86) International application number: PCT/US2020/044981
(87) International publication number: WO 2022/031281

(56) References cited:
- EP-A2- 1 457 727
- EP-A2- 2 293 004
- WO-A1-92/08074
- GB-A- 2 349 437
- US-A1- 2005 221 679

## Description

### FIELD

The present disclosure relates to fluid connectors, and, more particularly, to a fluid connection assembly including a polymer retainer that decreases the insertion force required for assembly while also allowing for disassembly.

### BACKGROUND

Fluid connectors, fluid connections and fluid connection assemblies are integral components for many applications, and especially for automotive applications. Since an automotive system is made up of various components such as a radiator, transmission, and engine, fluid must be able to travel not only within each component but also between components. An example of fluid traveling between components is the transmission fluid traveling from the transmission to the transmission oil cooler in order to lower the temperature of the transmission fluid. Fluid predominantly moves between components via flexible or rigid hoses which connect to each component by fluid connectors. Such fluid connectors typically include a retaining clip, retaining ring clip, or snap ring carried on the connector body which is adapted to snap behind a raised shoulder of a tube end form when the tube end form is fully inserted into the connector body. However, in order for the fluid connector to properly function, slots or apertures must be machined in the connector body such that the retaining clip can protrude therethough and engage the tube end form, which requires extra post-process manufacturing. Additionally, during the assembly process, installation of the retaining clip onto the connector body is difficult and failure to install the retaining clip properly can jeopardize the structural integrity of the retaining clip. Furthermore, since the retaining clips are very thin and small, it is easy to lose them if dropped or misplaced.

Known coupling assemblies are disclosed in EP 2293004 A2, US2005/221679 A1, GB2349437 A and WO92/08074 A1.

Thus, there has been a long-felt need for a fluid connection assembly including a retainer that allows for disassembly, eliminates the need for post-process machining, and reduces the insertion force required to assemble the fluid connector.

### SUMMARY

According to aspects illustrated herein, there is provided a fluid connection assembly, comprising a connector body, including a first end, a second end including a radially inward extending protrusion, a first through-bore, a gland, and at least one seal arranged in the gland, and a retainer operatively arranged to be removably connected to the connector body, the retainer including a ring portion forming a third end, the third end operatively arranged to enclose the at least one seal in the gland, at least one short finger extending from the ring portion, and at least one long finger extending from the ring portion and terminating at a fourth end, wherein when the retainer is connected to the connector body the at least one long finger extends out of the connector body from the second end.

In some embodiments, the at least one short finger comprises a radially outward extending projection operatively arranged to engage the radially inward extending protrusion. In some embodiments, the radially outward extending projection comprises a frusto-conical surface. In some embodiments, the connector body further comprises a frusto-conical radially inward facing surface adjacent the protrusion, and the radially outward extending projection is operatively arranged to engage the frusto-conical radially inward facing surface. In some embodiments, the connector body further comprises at least one hole aligned with the frusto-conical radially inward facing surface. In some embodiments, when the retainer is connected to the connector body, the at least one hole is aligned with the at least one short finger. In some embodiments, the at least one long finger comprises a radially inward extending projection. In some embodiments, the fluid connection assembly further comprises a tube including a shoulder, wherein the radially inward extending projection is operatively arranged to engage the shoulder to lock the tube in the retainer. In some embodiments, the at least one short finger and the at least one long finger are separated by at least one slit. In some embodiments, the connector body further comprises a pocket, the radially outward extending projection operatively arranged to engage the pocket. In some embodiments, the connector body further comprises at least one hole aligned with the pocket, wherein the at least one hole provides access to the radially outward extending projection. In some embodiments, the retainer comprises a polymer.

According to aspects illustrated herein, there is provided a fluid connection assembly, comprising a connector body, including a first end, a second end, a first through-bore, a gland, and at least one seal arranged in the gland, and a retainer removably connected to the connector body, the retainer including a ring portion, a plurality of short fingers extending from the ring portion and operatively arranged to connect the retainer to the connector body, and a plurality of long fingers extending from the ring portion, wherein when the retainer is connected to the connector body, the plurality of long fingers extend out of the connector body from the second end.

In some embodiments, the connector body further comprises at least one recess arranged proximate the second end. In some embodiments, each of the plurality of short fingers comprises a radially outward extending projection operatively arranged to engage the at least one recess to lock the retainer in the connector body. In some embodiments, the connector body further comprises at least one hole aligned with the at least one recess, wherein when the retainer is connected to the connector body, the at least one hole provides access to the radially outward extending projections. In some embodiments, the at least one recess comprises a continuous frusto-conical radially inward facing surface. In some embodiments, the at least one recess comprises a plurality of circumferentially spaced pockets. In some embodiments, the fluid connection assembly further comprises a tube including a shoulder, each of the plurality of long fingers comprises a radially inward extending projection, and the radially inward extending projections are operatively arranged to engage the shoulder outside of the connector body to lock the tube to the retainer.

According to aspects illustrated herein, there is provided a fluid connection assembly, comprising a connector body, including a first end, a second end, a first through-bore, a gland, and at least one seal arranged in the gland, a retainer removably connected to the connector body, the retainer including a ring portion operatively arranged to enclose the at least one seal in the gland, at least one short finger extending from the ring portion, completely enclosed within the connector body, and operatively arranged to lock the retainer to the connector body, and at least one long finger extending from the ring portion, and a tube including a shoulder, wherein the at least one long finger engages the shoulder outside of the connector body to lock the tube to the retainer.

According to aspects illustrated herein, there is provided a quick connector assembly or quick connection mechanism that provides an ergonomically friendly, durable connection of a tube and connector body. The quick connector assembly addresses several problems: the design of the connection assembly reduces tube insertion forces into the connector body; the design of the connection assembly drives geometry changes within the connector body that makes machining the connector body more simple while reducing the cost of thereof; the connection assembly design improves tube retention to the connector body while minimizing axial travel of the tube; the connection assembly design provide for easier serviceability and disassembly; and, the connection assembly design simplifies the assembly process of the connector body as well as the insertion of the tube in the connector body.

In some embodiments, the connection assembly comprises a connector body, a tube, and a plastic retainer. The plastic or polymer retainer replaces current metal retainer technology and reduces insertion forces and machining costs, and simplifies the overall assembly. In some embodiments, the retainer forms half (the top half) of the seal or O-ring gland.

In some embodiments, the connector body comprises a straight bore to improve machinability and reduce costs. The O-ring is placed in the open O-ring gland. A backup ring (or backup rings) is placed on top of O-ring. The base diameter of the plastic retainer is large at the base so that it creates the top surface of the O-ring gland to seal the assembly. There are short and long fingers in this single piece retainer. The short fingers connect the retainer to the connector body and the long fingers connect the tube to the retainer.

The single retainer provides three functions: it creates the top sealing surface of the O-ring gland; it retains itself within the connector body (via the short fingers); and, it retains the tube (via the long fingers).

The short finger snap profile angle that snaps into the connector body has the same profile angle on the mating connector body recessed shoulder or protrusion. In some embodiments, the angled provide of the short finger projections and the recessed surface of the connector body may comprise a 15-degree angle to allow for easier assembly (i.e., lower insertion force) yet improved retention. As the retainer is pressed/inserted into the connector body, it snaps in under the top ledge of the recessed shoulder. The through-bores circumferentially arranged in the connector body allow for access to the snaps, for example, by a disconnect too.

The long fingers of the retainer are operatively arranged to allow easy tube insertion and to limit axial movement of the tube relative to the retainer (and connector body). As the tube is inserted into the retainer (and connector body), the long fingers easily expand (due to the recess in the leg that thins out the leg allowing to be more spring like) and snap back to engage the tube bead. The relationship of the radius of the snap hook is perpendicular to the tube bead radius. This is optimized in order maintain retention of the tube.

In some embodiments, a retainer is provided for a new tube design including short and long fingers. The retainer serves as the top of the O-ring groove/gland and sealing surface. Through-bores circumferentially arranged on the connector body allow access to the short fingers. The short fingers snap in to grooves or pockets within the connector body to lock the retainer within the connector body. The long fingers snap over an edge of the tube and lock the tube to the retainer (and connector body).

These and other objects, features, and advantages of the present disclosure will become readily apparent upon a review of the following detailed description of the disclosure, in view of the drawings and appended claims.

### BRIEF DESCRIPTION OF THE DRAWINGS

Various embodiments are disclosed, by way of example only, with reference to the accompanying schematic drawings in which corresponding reference symbols indicate corresponding parts, in which:
Figure 1 is a perspective view of a fluid connection assembly;
Figure 2 is an exploded perspective view of the fluid connection assembly shown in Figure 1;
Figure 3A is a perspective view of the retainer shown in Figure 1;
Figure 3B is an elevational view of the retainer shown in Figure 3A;
Figure 4 is a cross-sectional view of the fluid connection assembly taken generally along line 4-4 in Figure 1;
Figure 5 is a cross-sectional view of the fluid connection assembly taken generally along line 5-5 in Figure 1;
Figure 6 is a perspective view of a fluid connection assembly;
Figure 7 is an exploded perspective view of the fluid connection assembly shown in Figure 6;
Figure 8A is a perspective view of the retainer shown in Figure 6;
Figure 8B is an elevational view of the retainer shown in Figure 8A;
Figure 9 is a cross-sectional view of the fluid connection assembly taken generally along line 9-9 in Figure 6; and,
Figure 10 is a cross-sectional view of the fluid connection assembly taken generally along line **10-10** in Figure 6.

### DETAILED DESCRIPTION

At the outset, it should be appreciated that like drawing numbers on different drawing views identify identical, or functionally similar, structural elements. It is to be understood that the claims are not limited to the disclosed aspects.

Furthermore, it is understood that this disclosure is not limited to the particular methodology, materials and modifications described and as such may, of course, vary. It is also understood that the terminology used herein is for the purpose of describing particular aspects only, and is not intended to limit the scope of the claims.

Unless defined otherwise, all technical and scientific terms used herein have the same meaning as commonly understood to one of ordinary skill in the art to which this disclosure pertains. It should be understood that any methods, devices or materials similar or equivalent to those described herein can be used in the practice or testing of the example embodiments. The assembly of the present disclosure could be driven by hydraulics, electronics, pneumatics, and/or springs.

It should be appreciated that the term "substantially" is synonymous with terms such as "nearly," "very nearly," "about," "approximately," "around," "bordering on," "close to," "essentially," "in the neighborhood of," "in the vicinity of," etc., and such terms may be used interchangeably as appearing in the specification and claims. It should be appreciated that the term "proximate" is synonymous with terms such as "nearby," "close," "adjacent," "neighboring," "immediate," "adjoining," etc., and such terms may be used interchangeably as appearing in the specification and claims. The term "approximately" is intended to mean values within ten percent of the specified value.

It should be understood that use of "or" in the present application is with respect to a "non-exclusive" arrangement, unless stated otherwise. For example, when saying that "item x is A or B," it is understood that this can mean one of the following: (1) item x is only one or the other of A and B; (2) item x is both A and B. Alternately stated, the word "or" is not used to define an "exclusive or" arrangement. For example, an "exclusive or" arrangement for the statement "item x is A or B" would require that x can be only one of A and B. Furthermore, as used herein, "and/or" is intended to mean a grammatical conjunction used to indicate that one or more of the elements or conditions recited may be included or occur. For example, a device comprising a first element, a second element and/or a third element, is intended to be construed as any one of the following structural arrangements: a device comprising a first element; a device comprising a second element; a device comprising a third element; a device comprising a first element and a second element; a device comprising a first element and a third element; a device comprising a first element, a second element and a third element; or, a device comprising a second element and a third element.

Moreover, as used herein, the phrases "comprises at least one of" and "comprising at least one of" in combination with a system or element is intended to mean that the system or element includes one or more of the elements listed after the phrase. For example, a device comprising at least one of: a first element; a second element; and, a third element, is intended to be construed as any one of the following structural arrangements: a device comprising a first element; a device comprising a second element; a device comprising a third element; a device comprising a first element and a second element; a device comprising a first element and a third element; a device comprising a first element, a second element and a third element; or, a device comprising a second element and a third element. A similar interpretation is intended when the phrase "used in at least one of:" is used herein. Furthermore, as used herein, "and/or" is intended to mean a grammatical conjunction used to indicate that one or more of the elements or conditions recited may be included or occur. For example, a device comprising a first element, a second element and/or a third element, is intended to be construed as any one of the following structural arrangements: a device comprising a first element; a device comprising a second element; a device comprising a third element; a device comprising a first element and a second element; a device comprising a first element and a third element; a device comprising a first element, a second element and a third element; or, a device comprising a second element and a third element.

By "non-rotatably connected" elements, we mean that: the elements are connected so that whenever one of the elements rotate, all the elements rotate; and relative rotation between the elements is not possible. Radial and/or axial movement of non-rotatably connected elements with respect to each other is possible, but not required.

It should be appreciated that the term "tube" as used herein is synonymous with hose, pipe, channel, conduit, or any other suitable pipe flow used in hydraulics and fluid mechanics. It should further be appreciated that the term "tube" can mean a rigid or flexible conduit of any material suitable for containing and allowing the flow of a gas or a liquid.

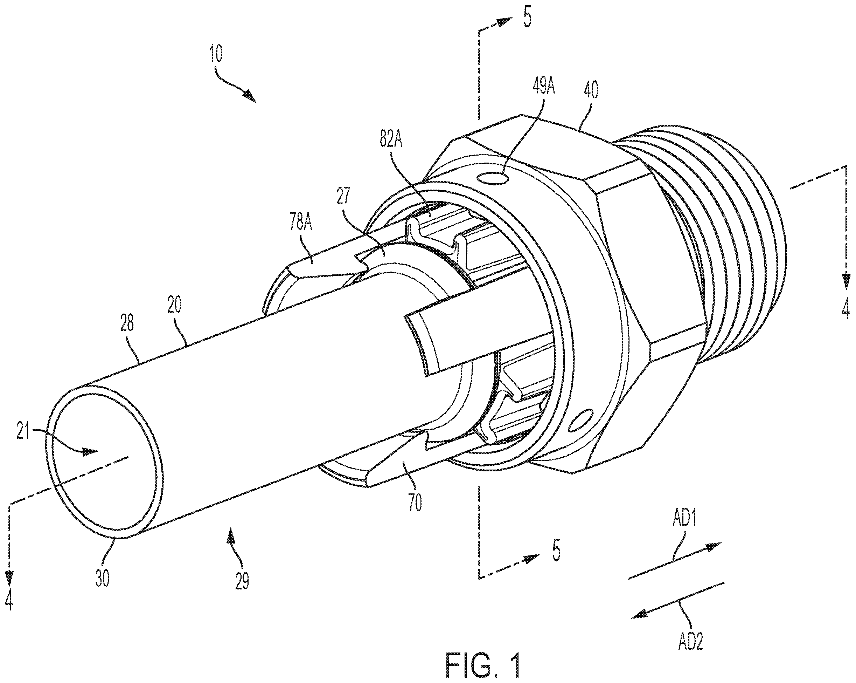

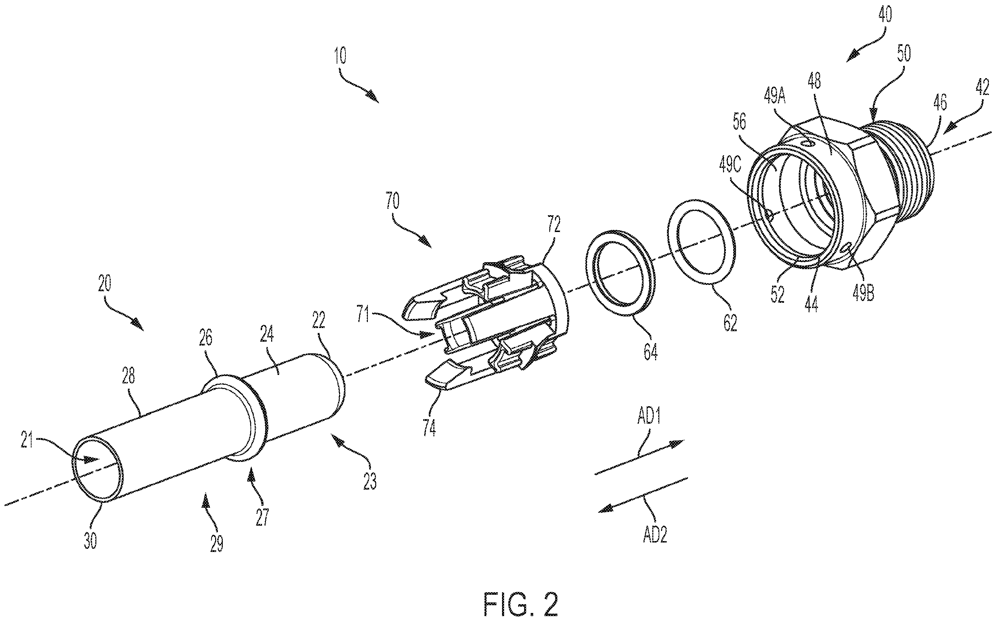

Adverting now to the figures, Figure 1 is a perspective view of fluid connection assembly **10.** Figure 2 is an exploded perspective view of fluid connection assembly **10.** Fluid connection assembly **10** generally comprises tube **20** or tube end form or hose, connector body **40,** and retainer **70.** The following description should be read in view of Figures 1-2.

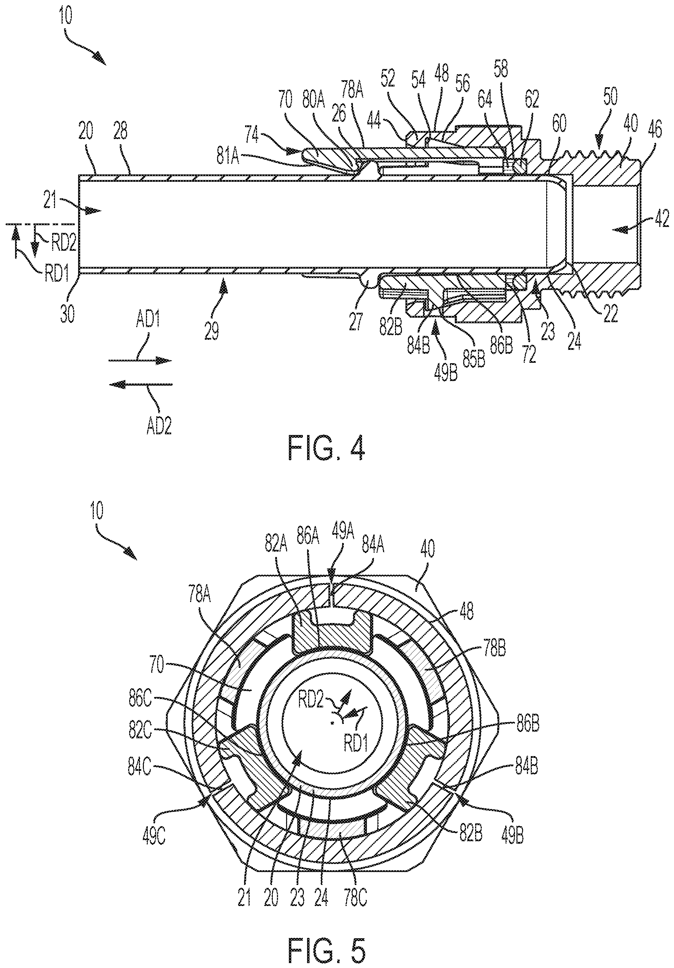

Tube **20** comprises end **22,** section **23,** shoulder or bead **27,** section **29,** end **30,** and through-bore **21.** Through-bore **21** extends through tube **20** from end **22** to end **30.** Section **23** is arranged between end **22** and shoulder **27** and comprises radially outward facing surface **24.** Radially outward facing surface **24** includes a substantially constant diameter. Shoulder **27** is arranged between section **23** and section **29** and comprises outward facing surface **26.** Outward facing surface **26** is curvilinear (i.e., parabolic in shape as best shown in Figure 4). Section **29** is arranged between shoulder **27** and end **30** and comprises radially outward facing surface **28.** Radially outward facing surface **28** includes a substantially constant diameter. Tube **20** is arranged to be inserted, specifically with end **22** first, into connector body **40.** Tube **20** is inserted into connector body **40,** in axial direction **AD1,** until retainer **70** snaps over shoulder **27** and is generally engages section **29** (i.e., fingers **78A-C** are aligned with section **29),** as will be described in greater detail below It should be appreciated that tube **20** may be any traditional tube end form comprising a shoulder (e.g., a ramp), which extends radially outward on the outer surface of the tube, to displace a retainer of the connector body to secure the tube within the connector body. For example, tube **20** may comprise a shoulder including a straight ramp (i.e., constant linear ramp) or a curvilinear ramp. In some embodiments, tube **20** comprises any tube end form that might utilize a retainer. For example, instead of a bead or a ramp-like shoulder, tube **20** may comprise a notch, a plurality of ramps, threading, a shoulder having a variable diameter portion (ramp) and a constant diameter portion connected thereto, any standard Society of Automotive Engineers (SAE) end form, etc. The present disclosure should not be limited to the use of only the tube shown in the figures, but rather any tube end form suitable for fluidly connecting to a connector body via a retainer. It should be appreciated that in some embodiments, and as shown, tube **20** comprises a frusto-conical surface at end **22.** Such frusto-conical surface aids in properly aligning tube **20** with respect to retainer **70** and connector body **40** during insertion of tube **20** into retainer **70.**

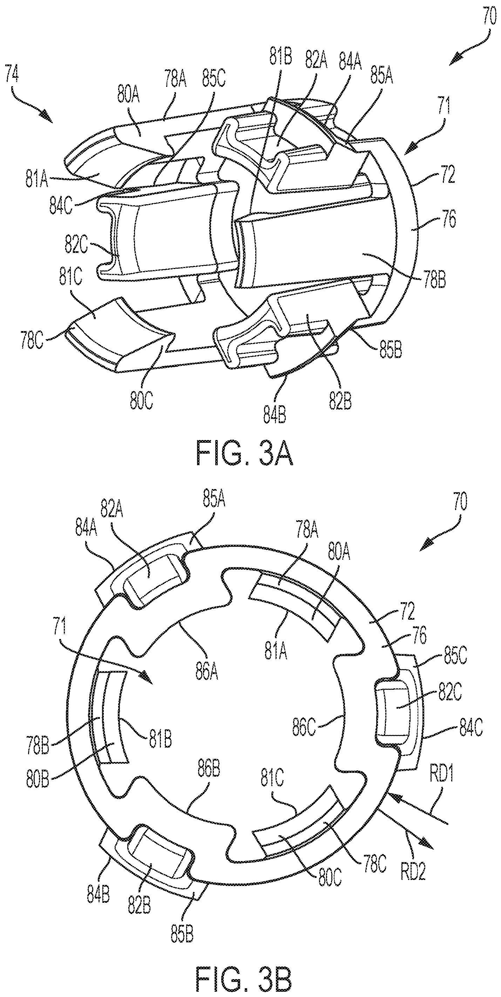

Figure 3A is a perspective view of retainer **70.** Figure 3B is an elevational view of the retainer **70.** The following description should be read in view of Figures 1-3B.

Retainer **70** generally comprises ring portion **76** forming end **72** and a plurality fingers (e.g., fingers **78A-C** and fingers **82A-C)** extending from ring portion **76** and forming end **74.** Ring portion **76** is generally ring shaped and comprises through-bore **71.** In some embodiments, when retainer 70 is fully inserted into connector body **40,** end **72** is operatively arranged to create the second half of the seal or O-ring gland, as will be described in greater detail below.

Fingers **78A-C** extend from ring portion **76** in axial direction **AD2** and are operatively arranged to engage shoulder **27** of tube **20.** Fingers **78A-C** comprise radially inward extending projections **80A-C,** respectively. Projections **80A-C** extend in radial direction **AD1** and, when engaged with shoulder **27,** lock tube **20** in retainer 70 (and connector body **40).** Fingers **78A-C** further comprise frusto-conical surfaces **81A-C,** respectively. As tube **20** is inserted into retainer **70** in axial direction **AD1,** frusto-conical surfaces **81A-C** engage surface **26** of shoulder **27** forcing fingers **78A-C** radially outward (i.e., in radial direction **RD2).** Once projections **80A-C** are aligned with section **29,** fingers **78A-C** snap back radially inward (i.e., in radial direction **RD1)** and secure tube **20** within retainer **70.** Fingers **78A-C** are elastic and are operatively arranged to flex and/or bend relative to ring portion **76.** In some embodiments, retainer **70** comprises a polymer. In some embodiments, fingers **78A-C** comprise a recess or thinned out portion that allows greater flexion.

Fingers **82A-C** extend from ring portion **76** in axial direction **AD2** and are operatively arranged to engage protrusion **52** and surface **56** of connector body **40.** Fingers **82A-C** comprise radially outward extending projections **84A-C,** respectively. Projections **84A-C** extend in radial direction **AD2** and, when engaged with radially inward extending protrusion **52,** lock retainer **70** in connector body **40.** Fingers **82A-C** further comprise frusto-conical surfaces **85A-C,** respectively. As retainer **70** is inserted into connector body **40** in axial direction **AD1,** frusto-conical surfaces **85A-C** engage protrusion **52** of connector body **40** forcing fingers **82A-C** radially inward (i.e., in radial direction **RD1).** Once projections **84A-C** are aligned with surface **56,** fingers **82A-C** snap back radially outward (i.e., in radial direction **RD2)** and secure retainer **70** within connector body **40.** Specifically, protrusion **52** of connector body **40** engages projections **84A-C,** thereby preventing displacement of retainer **70** in axial direction **AD2** with respect to connector body **40.** Fingers **82A-C** are elastic and are operatively arranged to flex and/or bend relative to ring portion **76.** In some embodiments, when retainer **70** is secured in connector body **40,** fingers **82A-C** and projections **84A-C** are aligned with holes **49A-C.** Such alignment allows a user to displace fingers **82A-C** radially inward (i.e., in radial direction **AD1)** to disengage projections **84A-C** from protrusion **52** and remove retainer **70** from connector body **40.** Fingers **82A-C** further comprise radially inward facing surfaces **86A-C,** respectively. Radially inward facing surfaces **86A-C** are operatively arranged to engage tube **20,** specifically radially outward facing surface **24** of section **23.** In some embodiments, and as shown, fingers **78A-C** and fingers **82A-C** alternate circumferentially. In some embodiments, fingers **78A-C** and fingers **82A-C** do not alternate every single finger.

Figure 4 is a cross-sectional view of fluid connection assembly **10** taken generally along line **4-4** in Figure 1. Figure 5 is a cross-sectional view of fluid connection **10** assembly taken generally along line **5-5** in Figure 1. The following description should be read in view of Figures 1-5.

Connector body **40** comprises end **44,** end **46,** and through-bore **42** extending from end **44** to end **46.** Connector body **40** comprises radially outward facing surface **48** comprising one or more release holes (e.g., **49A-C)** and radially outward facing surface **50.** Holes **49A-C** are operatively arranged to align with fingers **82A-C** and allow for a user to displace fingers **82A-C** radially inward in order to disengage projections **84A-C** from protrusion **52.** Radially outward facing surface **50** is operatively arranged to connect connector body **40** to another component, and may comprise threading. Connector body **40** further comprises radially inward extending protrusion **52** having (axial) surface **54,** frusto-conical surface **56,** gland or surface **58,** and radially inward facing surface **60.** Radially inward facing surface **60** is operatively arranged to engage radially outward facing surface **24** of tube **20.** Gland **58** is operatively arranged to at least partially enclose one or more seals (*e.g*., seals **62** and **64).** In some embodiments, fluid connection assembly **10** comprises an O-ring **62** and backup ring **64** arranged in gland **58.** When retainer **70** is locked in connector body **40,** end **72** encloses seals **62** and **64** completely within gland **58.** Seals **62** and **64** are operatively arranged to engage radially outward facing surface **24** to fluidly seal connector body **40** and tube **20.** It should be appreciated that in some embodiments, gland **58** is arranged as a groove in radially inward facing surface **60** that fully encloses both sides of the one or more seals. In such embodiments, end **72** of retainer **70** does not enclose the seals within the gland. Frusto-conical surface **56** and protrusion **52,** specifically surface **54,** are operatively arranged to engage projections **84A-C** of fingers **82A-C** to lock retainer **70** within connector body **40,** as previously described.

To assemble fluid connection assembly **10,** seals **62** and **64** are arranged in gland 58 and retainer 70 is then inserted in axial direction **AD1,** with end **72** first, into connector body 40. As retainer **70** is inserted into connector body **40,** frusto-conical surfaces **85A-C** of projections **84A-C** engage radially inward extending protrusion **52** thereby displacing fingers **82A-C** radially inward. Once projections **84A-C** are properly aligned with frusto-conical surface **56,** fingers **82A-C** snap back radially outward, and projections **84A-C** engage surface **54** of protrusion **52** thereby securing retainer **70** in connector body **40.** Then tube **20** is inserted in axial direction **AD1,** with end **22** first, into retainer **70.** As tube **20** is inserted into retainer **70,** frusto-conical surfaces **81A-C** of projections **80A-C** engage shoulder **27** displacing fingers **78A-C** radially outward. Once projections **80A-C** are aligned with section **29,** fingers **78A-C** snap back radially inward, and projections **80A-C** engage shoulder **27** and radially outward facing surface **28,** thereby securing tube **20** in retainer **70.**

It should be appreciated that, when retainer **70** is fully assembled to connector body **40,** fingers **78A-C** extend out of, in axial direction **AD2,** connector body **40.** Thus, when tube **20** is subsequently inserted into retainer **70,** protrusions **80A-C** of fingers **78A-C** engage shoulder **27** outside of connector body **40,** rather than inside. This is advantageous because it allows for greater flexion of fingers **78A-C** and thus a lower required insertion force of tube **20** into retainer **70** (and connector body **40).**

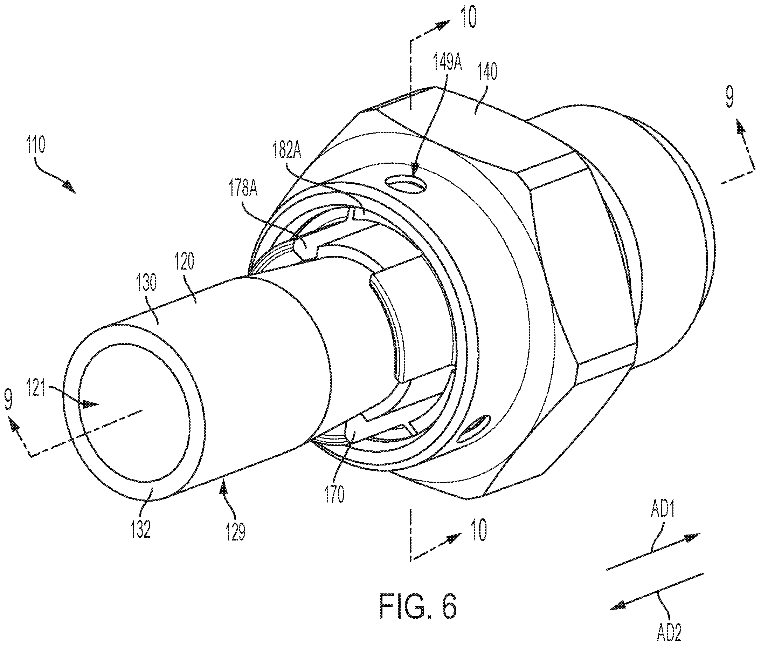

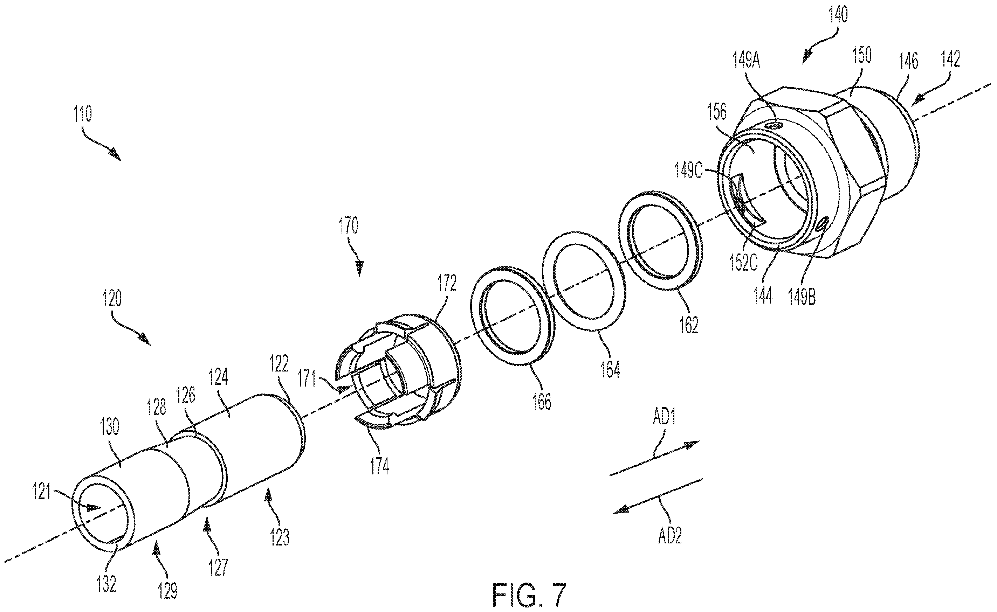

Figure 6 is a perspective view of fluid connection assembly **110.** Figure 7 is an exploded perspective view of fluid connection assembly **110.** Fluid connection assembly **110** generally comprises tube **120** or tube end form or hose, connector body **140,** and retainer **170.** The following description should be read in view of Figures 6-7.

Tube **120** comprises end **122,** section **123,** shoulder or groove **127,** section **129,** end **132,** and through-bore **121.** Through-bore **121** extends through tube **120** from end **122** to end **132.** Section **123** is arranged between end **122** and shoulder **127** and comprises radially outward facing surface **124.** Radially outward facing surface **124** includes a substantially constant diameter. Shoulder **127** is arranged between section **123** and section **129** and comprises shoulder (or axial) surface **126** and radially outward facing surface **128.** Radially outward facing surface **128** is frusto-conical and decreases in diameter in axial direction **AD1.** Section **129** is arranged between shoulder **127** and end **132** and comprises radially outward facing surface **130.** Radially outward facing surface **130** includes a substantially constant diameter. Tube **120** is arranged to be inserted, specifically with end **122** first, into connector body **140.** Tube **120** is inserted into connector body **140,** in axial direction **AD1,** until retainer **170** snaps over or into shoulder **127** and is generally engages surface **126** (i.e., fingers **178A-C** are aligned with radially outward facing surface **128),** as will be described in greater detail below It should be appreciated that tube **120** may be any traditional tube end form comprising a shoulder (e.g., a ramp or a bead), which extends radially outward on the outer surface of the tube, to displace a retainer of the connector body to secure the tube within the connector body. For example, tube **120** may comprise a shoulder including a straight ramp (i.e., constant linear ramp) or a curvilinear ramp. In some embodiments, tube **120** comprises any tube end form that might utilize a retainer. For example, instead of a groove, tube **120** may comprise a ramp, bead, notch, plurality of ramps, threading, shoulder having a variable diameter portion (ramp) and a constant diameter portion connected thereto, any standard Society of Automotive Engineers (SAE) end form, etc. The present disclosure should not be limited to the use of only the tube shown in the figures, but rather any tube end form suitable for fluidly connecting to a connector body via a retainer. It should be appreciated that in some embodiments, and as shown, tube **120** comprises a frusto-conical surface at end **122.** Such frusto-conical surface engages with projections **180A-C,** specifically frusto-conical surfaces **181A-C,** to force fingers **178A-C** radially outward during insertion of tube **120** into retainer **170.**

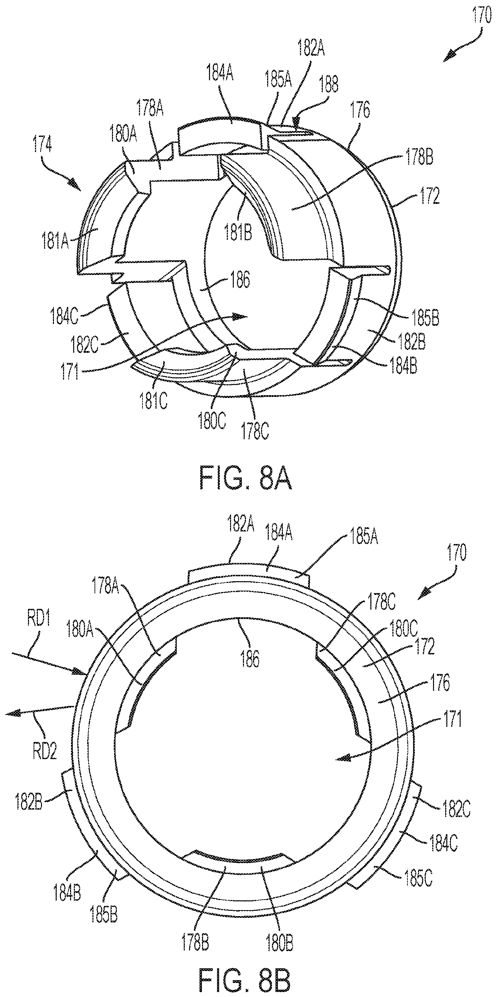

Figure 8A is a perspective view of retainer **170.** Figure 8B is an elevational view of retainer **170.** The following description should be read in view of Figures 6-8B.

Retainer **170** generally comprises ring portion **176** forming end **172** and a plurality fingers (e.g., fingers **178A-C** and fingers **182A-C)** extending from ring portion **176** and forming end **174.** Ring portion **176** is generally ring shaped and comprises through-bore **171.** In some embodiments, when retainer **170** is fully inserted into connector body **140,** end **172** is operatively arranged to create the second half of the seal or O-ring gland, as will be described in greater detail below.

Fingers **178A-C** extend from ring portion **176** in axial direction **AD2** and are operatively arranged to engage shoulder **127** of tube **120.** Fingers **178A-C** comprise radially inward extending projections **180A-C,** respectively. Projections **180A-C** extend in radial direction **AD1** and, when engaged with shoulder **127,** lock tube **120** in retainer **170** (and connector body **140).** Fingers **178A-C** further comprise frusto-conical surfaces **181A-C,** respectively. As tube **120** is inserted into retainer **170** in axial direction **AD1,** frusto-conical surfaces **181A-C** engage radially outward facing surface **124** of section **123** forcing fingers **178A-C** radially outward (i.e., in radial direction **RD2).** In a non-flexed state, projections **180A-C** have an inner diameter that is less than the diameter of radially outward facing surface **124,** which causes the outward displacement of fingers **178A-C** when engaged with section **123.** Once projections **180A-C** are aligned with radially outward facing surface **128,** fingers **178A-C** snap back radially inward (i.e., in radial direction **RD1)** and secure tube **120** within retainer **170.** Specifically, projections **180A-C** engage radially outward facing surface **128 and** surface **126** to prevent displacement of tube **120** in axial direction **AD2** relative to retainer **170.** Fingers **178A-C** are elastic and are operatively arranged to flex and/or bend relative to ring portion **176.** In some embodiments, retainer **170** comprises a polymer.

Fingers **182A-C** extend from ring portion **176** in axial direction **AD2** and are operatively arranged to engage pockets **152A-C** and surface **154** of connector body **140.** Fingers **182A-C** comprise radially outward extending projections **184A-C,** respectively. Projections **184A-C** extend in radial direction **AD2** and, when engaged with pockets **152A-C,** specifically surface **154,** lock retainer **170** in connector body **140.** Fingers **182A-C** further comprise frusto-conical surfaces **185A-C,** respectively. As retainer **170** is inserted into connector body **140** in axial direction **AD1,** frusto-conical surfaces **185A-C** engage end **144** of connector body **140** forcing fingers **182A-C** radially inward (i.e., in radial direction **RD1).** Once projections **184A-C** are aligned with pockets **152A-C,** fingers **182A-C** snap back radially outward (i.e., in radial direction **RD2)** and secure retainer **170** within connector body **140.** Specifically, surface **154** of each of pockets **152A-C** of connector body **140** engages projections **184A-C,** thereby preventing displacement of retainer **170** in axial direction **AD2** with respect to connector body **140.** Fingers **182A-C** are elastic and are operatively arranged to flex and/or bend relative to ring portion **176.** In some embodiments, when retainer **170** is secured in connector body **140,** fingers **182A-C** and projections **184A-C** are aligned with holes **149A-C.** Such alignment allows a user to displace fingers **182A-C** radially inward (i.e., in radial direction **AD1)** to disengage projections **184A-C** from pockets **152A-C** and remove retainer **170** from connector body **140.** It should be appreciated that pockets **152A-C** aid with proper alignment of fingers **182A-C** with holes **149A-C.** Furthermore, in some embodiments, when projections **184A-C** are fully engaged with pockets **152A-C,** retainer **170** is non-rotatably connected to connector body **140.** Retainer **170** further comprises radially inward facing surface **186.** Radially inward facing surface **186** is operatively arranged to engage tube **120,** specifically radially outward facing surface **124** of section **123.** In some embodiments, and as shown, fingers **178A-C** and fingers **182A-C** alternate circumferentially. In some embodiments, fingers **178A-C** and fingers **182A-C** do not alternate every single finger. In some embodiments, fingers **178A-C** are separated from fingers **182A-C** by slits **188.** Slits **188** more elastic displacement (i.e., flex) between fingers **178A-C** and **182A-C.** It should be appreciated that in some embodiments, and as shown, retainer **170** comprises a frusto-conical surface at end **172.** Such frusto-conical surface aids in properly aligning retainer **170** with respect to connector body **140** during insertion of retainer **170** into connector body **140.**

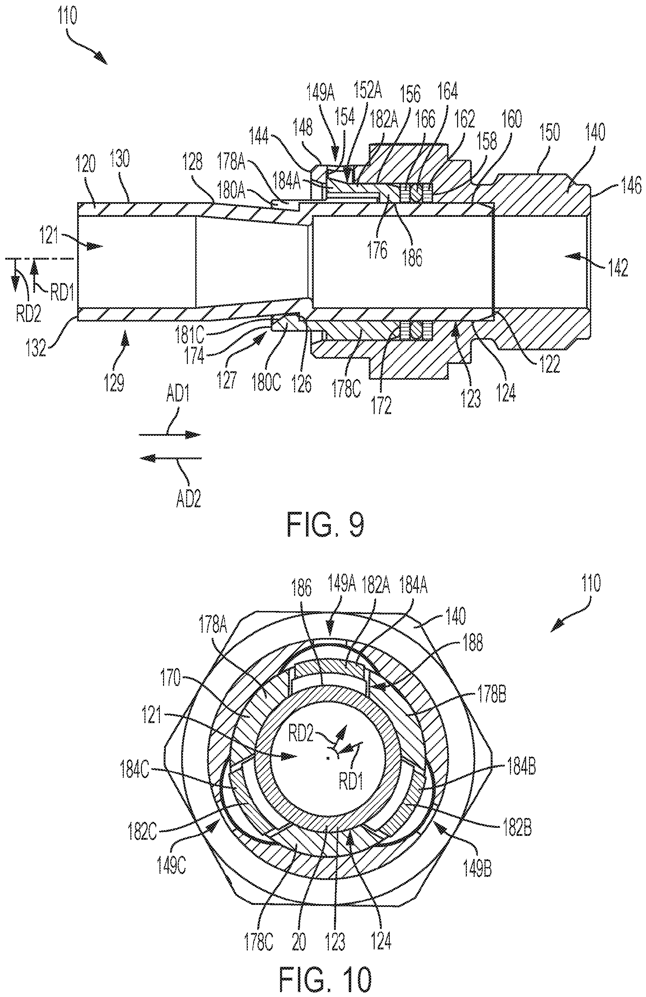

Figure 9 is a cross-sectional view of fluid connection assembly **110** taken generally along line **9-9** in Figure 6. Figure 10 is a cross-sectional view of fluid connection assembly **110** taken generally along line **10-10** in Figure 6. The following description should be read in view of Figures 6-10.

Connector body **140** comprises end **144,** end **146,** and through-bore **142** extending from end **144** to end **146.** Connector body **140** comprises radially outward facing surface **148** comprising one or more release holes (e.g., **149A-C)** and radially outward facing surface **150.** Holes **149A-C** are operatively arranged to align with fingers **182A-C** and allow for a user to displace fingers **182A-C** radially inward in order to disengage projections **184A-C** from pockets **152A-C.** Radially outward facing surface **150** is operatively arranged to connect connector body **140** to another component, and may comprise threading. Connector body **140** further comprises radially outward extending pockets **152A-C,** each of pockets **152A-C** including (axial) surface **154,** radially inward facing surface **156,** gland or surface **158,** and radially inward facing surface **160.** Radially inward facing surface **160** is operatively arranged to engage radially outward facing surface **124** of tube **120.** Surface **158** and radially inward facing surface **156** are operatively arranged to at least partially enclose one or more seals (e.g., seals **162, 164,** and **166).** In some embodiments, fluid connection assembly **110** comprises an O-ring **162,** backup ring **164,** and backup ring **166** arranged in gland **158.** When retainer **170** is locked in connector body **140,** end **172** encloses seals **162, 164,** and **166** completely within gland **158.** Seals **162, 164,** and **166** are operatively arranged to engage radially outward facing surface **124** to fluidly seal connector body **140** and tube **120.** It should be appreciated that in some embodiments, gland **158** is arranged as a groove in radially inward facing surface **160** that fully encloses both sides of the one or more seals. In such embodiments, end **172** of retainer **170** does not enclose the seals within the gland. Pockets **152A-C,** specifically surface(s) **154,** are operatively arranged to engage projections **184A-C** of fingers **182A-C** to lock retainer **170** within connector body **140,** as previously described. Radially inward facing surface **156** further engages a radially outward facing surface of retainer **170.**

To assemble fluid connection assembly **110,** seals **162, 164,** and **166** are arranged in gland **158** and retainer **170** is then inserted in axial direction **AD1,** with end **172** first, into connector body **140.** As retainer **170** is inserted into connector body **140,** frusto-conical surfaces **185A-C** of projections **184A-C** engage end **144** of connector body **140** thereby displacing fingers **182A-C** radially inward. Once projections **184A-C** are properly aligned with pockets surface **152A-C,** fingers **182A-C** snap back radially outward, and projections **184A-C** engage surface(s) **154** of pockets **152A-C** thereby securing retainer **170** in connector body **140.** Then tube **120** is inserted in axial direction **AD1,** with end **122** first, into retainer **170.** As tube **120** is inserted into retainer **170,** frusto-conical surfaces **181A-C** of projections **180A-C** engage section **123,** specifically radially outward facing surface **124,** displacing fingers **178A-C** radially outward. Once projections **180A-C** are aligned with radially outward facing surface **128,** fingers **178A-C** snap back radially inward, and projections **180A-C** engage shoulder **127,** specifically radially outward facing surface **128** and surface **126,** thereby securing tube **120** in retainer **170.**

It should be appreciated that, when retainer **170** is fully assembled to connector body **140,** fingers **178A-C** extend out of, in axial direction **AD2,** connector body **140.** Thus, when tube **120** is subsequently inserted into retainer **170,** protrusions **180A-C** of fingers **178A-C** engage shoulder **127** outside of connector body **140,** rather than inside. This is advantageous because it allows for greater flexion of fingers **178A-C** and thus a lower required insertion force of tube **120** into retainer **170** (and connector body **140).**

### LIST OF REFERENCE NUMERALS

- **10**: Fluid connection assembly
- **20**: Tube (or tube end form or hose)
- **21**: Through-bore
- **22**: End
- **23**: Section
- **24**: Radially outward facing surface
- **26**: Outward facing surface
- **27**: Shoulder (or bead)
- **28**: Radially outward facing surface
- **29**: Section
- **30**: End
- **40**: Connector body
- **42**: Through-bore
- **44**: End
- **46**: End
- **48**: Radially outward facing surface
- **49A**: Hole
- **49B**: Hole
- **49C**: Hole
- **50**: Radially outward facing surface
- **52**: Protrusion
- **54**: Surface
- **56**: Surface
- **58**: Gland (or surface)
- **60**: Radially inward facing surface
- **62**: Seal
- **64**: Seal
- **70**: Retainer
- **71**: Through-bore
- **72**: End
- **74**: End
- **76**: Ring portion
- **78A**: Finger
- **78B**: Finger
- **78C**: Finger
- **80A**: Projection
- **80B**: Projection
- **80C**: Projection
- **81A**: Surface
- **81B**: Surface
- **81C**: Surface
- **82A**: Finger
- **82B**: Finger
- **82C**: Finger
- **84A**: Projection
- **84B**: Projection
- **84C**: Projection
- **85A**: Surface
- **85B**: Surface
- **85C**: Surface
- **86A**: Radially inward facing surface
- **86B**: Radially inward facing surface
- **86C**: Radially inward facing surface
- **110**: Fluid connection assembly
- **120**: Tube (or tube end form or hose)
- **121**: Through-bore
- **122**: End
- **123**: Section
- **124**: Radially outward facing surface
- **126**: Surface
- **127**: Shoulder (or groove)
- **128**: Radially outward facing surface
- **129**: Section
- **130**: Radially outward facing surface
- **132**: End
- **140**: Connector body
- **142**: Through-bore
- **144**: End
- **146**: End
- **148**: Radially outward facing surface
- **149A**: Hole
- **149B**: Hole
- **149C**: Hole
- **150**: Radially outward facing surface
- **152A**: Pocket
- **152B**: Pocket
- **152C**: Pocket
- **154**: Surface
- **156**: Radially inward facing surface
- **158**: Surface (or gland)
- **160**: Radially inward facing surface
- **162**: Seal
- **164**: Seal
- **166**: Seal
- **170**: Retainer
- **171**: Through-bore
- **172**: End
- **174**: End
- **176**: Ring portion
- **178A**: Finger
- **178B**: Finger
- **178C**: Finger
- **180A**: Projection
- **180B**: Projection
- **180C**: Projection
- **181A**: Surface
- **181B**: Surface
- **181C**: Surface
- **182A**: Finger
- **182B**: Finger
- **182C**: Finger
- **184A**: Projection
- **184B**: Projection
- **184C**: Projection
- **185A**: Surface
- **185B**: Surface
- **185C**: Surface
- **186**: Radially inward facing surface
- **188**: Slits
- **AD1**: Axial direction
- **AD2**: Axial direction
- **RD1**: Radial direction
- **RD2**: Radial direction

## Claims

1. A fluid connection assembly (10, 110), comprising:
a connector body (40, 140), including:
a first end (46, 146);
a second end (44, 144) including a radially inward extending protrusion (52, 154);
a first through-bore (42, 142);
a gland (58, 158); and
at least one seal (62, 64, 162, 164, 166) arranged in the gland (58, 158); and
a retainer (70, 170) operatively arranged to be removably connected to the connector body (40, 140), the retainer (70, 170) including:
a ring portion (76, 176) forming a third end (72, 172), the third end (72, 172) operatively arranged to enclose the at least one seal (62, 64, 162, 164, 166) in the gland (58, 158);
at least one short finger (82A-C, 182A-C) extending from the ring portion (76, 176) in a first axial direction (AD2); and
at least one long finger (78A-C, 178A-C) extending from the ring portion (76, 176) in the first axial direction (AD2) and terminating at a fourth end (74, 174);
wherein when the retainer (70, 170) is connected to the connector body (40, 140) the at least one long finger (78A-C, 178A-C) extends out of the connector body (40, 140) from the second end (44, 144).

2. The fluid connection assembly (10, 110) as recited in claim 1, wherein the at least one short finger (82A-C, 182A-C) comprises a radially outward extending projection (84A-C, 184A-C) operatively arranged to engage the radially inward extending protrusion (52, 154).

3. The fluid connection assembly (10, 110) as recited in claim 2, wherein the radially outward extending projection (84A-C, 184A-C) comprises a frusto-conical surface (85A-C, 185A-C).

4. The fluid connection assembly (10, 110) as recited in claim 2, wherein:
the connector body (40, 140) further comprises a frusto-conical radially inward facing surface (56, 152A-C) adjacent the protrusion (52, 154); and
the radially outward extending projection (84A-C, 184A-C) is operatively arranged to engage the frusto-conical radially inward facing surface (56, 152A-C).

5. The fluid connection assembly (10, 110) as recited in claim 4, wherein the connector body (40, 140) further comprises at least one hole (49A-C, 149A-C) aligned with the frusto-conical radially inward facing surface (56, 152A-C).

6. The fluid connection assembly (10, 110) as recited in claim 5, wherein when the retainer (70, 170) is connected to the connector body (40, 140), the at least one hole (49A-C, 149A-C) is aligned with the at least one short finger (82A-C, 182A-C).

7. The fluid connection assembly (10, 110) as recited in claim 1, wherein the at least one long finger (78A-C, 178A-C) comprises a radially inward extending projection (80A-C, 180A-C).

8. The fluid connection assembly (10, 110) as recited in claim 7, further comprising a tube (20, 120) including a shoulder (27, 127), wherein the radially inward extending projection (80A-C, 180A-C) is operatively arranged to engage the shoulder (27, 127) to lock the tube (20, 120) in the retainer (70, 170).

9. The fluid connection assembly (10, 110) as recited in claim 1, wherein the at least one short finger (82A-C, 182A-C) and the at least one long finger (78A-C, 178A-C) are separated by at least one slit (188).

10. The fluid connection assembly as recited in claim 1, wherein the plurality of short fingers are operatively arranged to connect the retainer to the connector body.

11. The fluid connection assembly (10, 110) as recited in claim 1, wherein the connector body (40, 140) further comprises at least one recess (56, 152A-C) arranged proximate the second end (44, 144).

12. The fluid connection assembly (10, 110) as recited in claim 11, wherein each of the plurality of short fingers (82A-C, 182A-C) comprises a radially outward extending projection (84A-C, 184A-C) operatively arranged to engage the at least one recess (56, 152A-C) to lock the retainer (70, 170) in the connector body (40, 140).

13. The fluid connection assembly (10, 110) as recited in claim 11, wherein the connector body (40, 140) further comprises at least one hole (49A-C, 149A-C) aligned with the at least one recess (56, 152A-C), wherein when the retainer (70, 170) is connected to the connector body (40, 140), the at least one hole (49A-C, 149A-C) provides access to the radially outward extending projections (84A-C, 184A-C).

14. The fluid connection assembly (10) as recited in claim 11, wherein the at least one recess (56) comprises a continuous frusto-conical radially inward facing surface (56).

15. The fluid connection assembly (110) as recited in claim 11, wherein the at least one recess (152A-C) comprises a plurality of circumferentially spaced pockets (152A-C).

## Patentansprüche

1. Fluidverbindungsanordnung (10, 110), umfassend:
ein Verbindungsgehäuse (40, 140), umfassend:
ein erstes Ende (46, 146);
ein zweites Ende (44, 144) umfassend einen radial nach innen vorspringenden Vorsprung (52, 154);
eine erste Durchgangsbohrung (42, 142);
eine Dichtungsbuchse (58, 158); und
mindestens eine Dichtung (62, 64, 162, 164, 166), die
in der Dichtungsbuchse (58, 158) angeordnet ist; und einen Halter (70, 170), der betriebsbereit angeordnet ist, um lösbar mit dem Verbindungsgehäuse (40, 140) verbunden zu werden, wobei der Halter (70, 170) umfasst:
einen Ringabschnitt (76, 176), der ein drittes Ende (72, 172) bildet, wobei das dritte Ende (72, 172) betriebsbereit angeordnet ist, um die mindestens eine Dichtung (62, 64, 162, 164, 166) in der Dichtungsbuchse (58, 158) zu umschließen;
mindestens einen kurzen Finger (82A-C, 182A-C), der sich vom Ringabschnitt (76, 176) in eine erste axiale Richtung (AD2) erstreckt; und
mindestens einen langen Finger (78A-C, 178A-C), der sich vom Ringabschnitt (76, 176) in die erste axiale Richtung (AD2) erstreckt und an einem vierten Ende (74, 174) endet;
wobei, wenn der Halter (70, 170) mit dem Verbindungsgehäuse (40, 140) verbunden ist, sich der mindestens eine lange Finger (78A-C, 178A-C) aus dem Verbindungsgehäuse (40, 140) vom zweiten Ende (44, 144) erstreckt.

2. Fluidverbindungsanordnung (10, 110) nach Anspruch 1, wobei der mindestens eine kurze Finger (82A-C, 182A-C) einen radial nach außen vorspringenden Vorsprung (84A-C, 184A-C) umfasst, der dazu ausgelegt ist ist, den radial nach innen vorspringenden Vorsprung (52, 154) zu greifen.

3. Fluidverbindungsanordnung (10, 110) nach Anspruch 2, wobei der radial nach außen vorspringende Vorsprung (84A-C, 184A-C) eine kegelstumpfförmige Oberfläche (85A-C, 185A-C) umfasst.

4. Fluidverbindungsanordnung (10, 110) nach Anspruch 2, wobei:
das Verbindungsgehäuse (40, 140) weiter eine kegelstumpfförmige, radial nach innen gerichtete Oberfläche (56, 152A-C) umfasst, die an den Vorsprung (52, 154) angrenzt; und
der radial nach außen vorspringende Vorsprung (84A-C, 184A-C) dazu ausgelegt ist, die kegelstumpfförmige, radial nach innen gerichtete Oberfläche (56, 152A-C) zu greifen.

5. Fluidverbindungsanordnung (10, 110) nach Anspruch 4, wobei das Verbindungsgehäuse (40, 140) weiter mindestens ein Loch (49A-C, 149A-C) umfasst, das mit der kegelstumpfförmigen, radial nach innen gerichteten Oberfläche (56, 152A-C) fluchtend ausgerichtet ist.

6. Fluidverbindungsanordnung (10, 110) nach Anspruch 5, wobei, wenn der Halter (70, 170) mit dem Verbindungsgehäuse (40, 140) verbunden ist, das mindestens eine Loch (49A-C, 149A-C) mit dem mindestens einen kurzen Finger (82A-C, 182A-C) fluchtend ausgerichtet ist.

7. Fluidverbindungsanordnung (10, 110) nach Anspruch 1, wobei der mindestens eine lange Finger (78A-C, 178A-C) einen radial nach innen vorspringenden Vorsprung (80A-C, 180A-C) umfasst.

8. Fluidverbindungsanordnung (10, 110) nach Anspruch 7, weiter umfassend ein Rohr (20, 120) einschließlich einer Schulter (27, 127), wobei der radial nach innen vorspringende Vorsprung (80A-C, 180A-C) dazu ausgelegt ist, die Schulter (27, 127) zu greifen, um das Rohr (20, 120) im Halter (70, 170) zu verriegeln.

9. Fluidverbindungsanordnung (10, 110) nach Anspruch 1, wobei der mindestens eine kurze Finger (82A-C, 182A-C) und der mindestens eine lange Finger (78A-C, 178A-C) durch mindestens einen Schlitz (188) getrennt sind.

10. Fluidverbindungsanordnung nach Anspruch 1, wobei die Vielzahl von kurzen Fingern dazu ausgelegt ist, den Halter mit dem Verbindungsgehäuse zu verbinden.

11. Fluidverbindungsanordnung (10, 110) nach Anspruch 1, wobei das Verbindungsgehäuse (40, 140) weiter mindestens eine Ausnehmung (56, 152A-C) umfasst, die in der Nähe des zweiten Endes (44, 144) angeordnet ist.

12. Fluidverbindungsanordnung (10, 110) nach Anspruch 11, wobei jeder der Vielzahl von kurzen Fingern (82A-C, 182A-C) einen radial nach außen vorspringenden Vorsprung (84A-C, 184A-C) umfasst, der dazu ausgelegt ist, in wenigstens eine eine Ausnehmung (56, 152A-C) zu greifen, um den Halter (70, 170) im Verbindungsgehäuse (40, 140) zu verriegeln.

13. Fluidverbindungsanordnung (10, 110) nach Anspruch 11, wobei das Verbindungsgehäuse (40, 140) weiter mindestens ein Loch (49A-C, 149A-C) umfasst, das mit der mindestens einen Ausnehmung (56, 152A-C) fluchtend ausgerichtet ist, wobei, wenn der Halter (70, 170) mit dem Verbindungsgehäuse (40, 140) verbunden ist, das mindestens eine Loch (49A-C, 149A-C) Zugang zu den radial nach außen erstreckenden Vorsprüngen (84A-C, 184A-C) bietet.

14. Fluidverbindungsanordnung (10) nach Anspruch 11, wobei die mindestens eine Ausnehmung (56) eine kontinuierliche, kegelstumpfförmige radial nach innen gerichtete Oberfläche (56) umfasst.

15. Fluidverbindungsanordnung (110) nach Anspruch 11, wobei die mindestens eine Ausnehmung (152A-C) eine Vielzahl von in Umfangsrichtung beabstandeten Taschen (152A-C) umfasst.

## Revendications

1. Ensemble (10, 110) de connexion de fluide, comprenant :
un corps (40, 140) de connecteur, incluant :
une première extrémité (46, 146) ;
une deuxième extrémité (44, 144) incluant une saillie (52, 154) s'étendant radialement vers l'intérieur ;
un premier alésage traversant (42, 142) ;
un presse-étoupe (58, 158) ; et
au moins un joint (62, 64, 162, 164, 166) agencé dans le presse-étoupe (58, 158) ; et
un dispositif de retenue (70, 170) opérationnellement agencé pour être connecté de façon amovible au corps (40, 140) de connecteur, le dispositif de retenue (70, 170) incluant :
une partie annulaire (76, 176) formant une troisième extrémité (72, 172), la troisième extrémité (72, 172) opérationnellement agencée pour renfermer l'au moins un joint (62, 64, 162, 164, 166) dans le presse-étoupe (58, 158) ;
au moins un doigt court (82A-C, 182A-C) s'étendant depuis la partie annulaire (76, 176) dans un premier sens axial (AD2) ; et
au moins un doigt long (78A-C, 178A-C) s'étendant depuis la partie annulaire (76, 176) dans le premier sens axial (AD2) et se terminant à une quatrième extrémité (74, 174) ;
dans lequel, lorsque le dispositif de retenue (70, 170) est connecté au corps (40, 140) de connecteur, l'au moins un doigt long (78A-C, 178A-C) s'étend hors du corps (40, 140) de connecteur depuis la deuxième extrémité (44, 144).

2. Ensemble (10, 110) de connexion de fluide selon la revendication 1, dans lequel l'au moins un doigt court (82A-C, 182A-C) comprend une projection (84A-C, 184A-C) s'étendant radialement vers l'extérieur opérationnellement agencée pour engager la saillie (52, 154) s'étendant radialement vers l'intérieur.

3. Ensemble (10, 110) de connexion de fluide selon la revendication 2, dans lequel la projection (84A-C, 184A-C) s'étendant radialement vers l'extérieur comprend une surface tronconique (85A-C, 185A-C).

4. Ensemble (10, 110) de connexion de fluide selon la revendication 2, dans lequel :
le corps (40, 140) de connecteur comprend en outre une surface tronconique (56, 152A-C) faisant face radialement vers l'intérieur adjacente à la saillie (52, 154) ; et
la projection (84A-C, 184A-C) s'étendant radialement vers l'extérieur est opérationnellement agencée pour engager la surface tronconique (56, 152A-C) faisant face radialement vers l'intérieur.

5. Ensemble (10, 110) de connexion de fluide selon la revendication 4, dans lequel le corps (40, 140) de connecteur comprend en outre au moins un trou (49A-C, 149A-C) aligné avec la surface tronconique (56, 152A-C) faisant face radialement vers l'intérieur.

6. Ensemble (10, 110) de connexion de fluide selon la revendication 5, dans lequel, lorsque le dispositif de retenue (70, 170) est connecté au corps (40, 140) de connecteur, l'au moins un trou (49A-C, 149A-C) est aligné avec l'au moins un doigt court (82A-C, 182A-C).

7. Ensemble (10, 110) de connexion de fluide selon la revendication 1, dans lequel l'au moins un doigt long (78A-C, 178A-C) comprend une projection (80A-C, 180A-C) s'étendant radialement vers l'intérieur.

8. Ensemble (10, 110) de connexion de fluide selon la revendication 7, comprenant en outre un tube (20, 120) incluant un épaulement (27, 127), dans lequel la projection (80A-C, 180A-C) s'étendant radialement vers l'intérieur est opérationnellement agencée pour engager l'épaulement (27, 127) pour verrouiller le tube (20, 120) dans le dispositif de retenue (70, 170).

9. Ensemble (10, 110) de connexion de fluide selon la revendication 1, dans lequel l'au moins un doigt court (82A-C, 182A-C) l'au moins un doigt long (78A-C, 178A-C) sont séparés par au moins une fente (188).

10. Ensemble de connexion de fluide selon la revendication 1, dans lequel la pluralité de doigts courts sont opérationnellement agencés pour connecter le dispositif de retenue au corps de connecteur.

11. Ensemble (10, 110) de connexion de fluide selon la revendication 1, dans lequel le corps (40, 140) de connecteur comprend en outre au moins un renfoncement (56, 152A-C) agencé à proximité de la deuxième extrémité (44, 144).

12. Ensemble (10, 110) de connexion de fluide selon la revendication 11, dans lequel chacun de la pluralité de doigts courts (82A-C, 182A-C) comprend une projection (84A-C, 184A-C) s'étendant radialement vers l'extérieur opérationnellement agencée pour engager l'au moins un renfoncement (56, 152A-C) pour verrouiller le dispositif de retenue (70, 170) dans le corps (40, 140) de connecteur.

13. Ensemble (10, 110) de connexion de fluide selon la revendication 11, dans lequel le corps (40, 140) de connecteur comprend en outre au moins un trou (49A-C, 149A-C) aligné avec l'au moins un renfoncement (56, 152A-C), dans lequel, lorsque le dispositif de retenue (70, 170) est connecté au corps (40, 140) de connecteur, l'au moins un trou (49A-C, 149A-C) donne accès aux projections (84A-C, 184A-C) s'étendant radialement vers l'extérieur.

14. Ensemble (10) de connexion de fluide selon la revendication 11, dans lequel l'au moins un renfoncement (56) comprend une surface tronconique continue (56) faisant face radialement vers l'intérieur.

15. Ensemble (110) de connexion de fluide selon la revendication 11, dans lequel l'au moins un renfoncement (152A-C) comprend une pluralité de poches (152A-C) espacées circonférentiellement.
